# EUROPEAN PATENT APPLICATION

(11) **EP 1 536 540 A2**
(43) Date of publication of application: **01.06.2005**
(21) Application number: 04027759.2
(22) Date of filing: 23.11.2004
(51) Int. Cl.: H02J 7/00

(54) **Battery assembly and battery pack**

(30) Priority: 26.11.2003 JP 2003396340
(71) Applicant: MAKITA CORPORATION, Anjo-shi, Aichi-ken, 446-8502 (JP)
(72) Inventor: Sakakibara, Kazuyuki Makita Corporation, Anjo-shi Aichi-ken 446-8502 (JP)
(74) Representative: Kramer - Barske - Schmidtchen

(57) **Abstract**

It is an object of the invention to provide a technique for coping with the difference of self-discharge between battery groups that form a battery assembly. According to the invention, a battery assembly that includes a plurality of battery groups and feeder is provided. Battery groups may include at least first and second battery groups and each battery group is defined by one or more cells. The feeder may feed electricity from the first battery group to the second battery group based on a difference in residual capacity caused by a difference of self-discharge amount between the first battery group and the second battery group. According to the invention, because difference in residual capacity between the respective battery groups can be balanced, even if the battery assembly is recharged in the state in which the battery groups have some residual capacities, overcharge and insufficient charge can be alleviated.

## Description

### BACKGROUND OF THE INVENTION

### Field of the Invention

The present invention relates to a battery assembly having a plurality of battery groups and more particularly to a technique of effectively accommodating variations that result from a difference of self-discharge between the battery groups.

### Description of the Related Art

Japanese Patent No. 3349321 discloses a battery assembly having a plurality of cells connected together in series. The known battery assembly includes a non-aqueous secondary battery group defined by a plurality of non-aqueous secondary cells such as lithium ion secondary cells and an aqueous secondary battery group defined by a plurality of aqueous secondary cells such as nickel hydrogen secondary cells.

The known battery assembly causes self-discharge when being left after the charge. Besides that, it is known that the speed of self-discharge is different between the aqueous secondary cells and the non-aqueous secondary cells. Generally, the self-discharge speed of the aqueous secondary cells is faster than the non-aqueous secondary cells. Therefore, after a lapse of a predetermined time period, the aqueous secondary cells may possibly have a smaller residual battery capacity than the non-aqueous secondary cells.
For example, when the battery assembly is recharged in the state in which there is a difference in residual capacity between the battery groups, the non-aqueous secondary cells having a larger residual capacity easily cause overcharge, while the aqueous secondary cells having a smaller residual capacity are not fully charged.

### SUMMARY OF THE INVENTION

Accordingly, it is an object of the invention to provide a technique for coping with the difference of self-discharge between battery groups that form a battery assembly. According to the invention, a battery assembly that includes a plurality of battery groups and feeder is provided. Battery groups may include at least first and second battery groups and each battery group is defined by one or more cells. The feeder may feed electricity from the first battery group to the second battery group based on a difference in residual capacity caused by a difference of self-discharge amount between the first battery group and the second battery group. According to the invention, because difference in residual capacity between the respective battery groups can be balanced, even if the battery assembly is recharged in the state in which the battery groups have some residual capacities, overcharge and insufficient charge can be alleviated.

Other objects, features and advantages of the present invention will be readily understood after reading the following detailed description together with the accompanying drawings and the claims.

### BRIEF DESCRIPTION OF THE DRAWINGS

FIG. 1 is a block diagram of a battery pack 100 according to an embodiment of the invention, together with a block diagram of a charger 200 for charging the battery pack 100.
FIG. 2 shows the state of self-discharge of a battery assembly in the battery pack 100.
FIG. 3 shows the state of feeding from a lithium ion battery group 110 to a capacitor C1.
FIG. 4 shows the state of feeding from the capacitor C1 to a nickel hydrogen battery group 120.
FIG. 5 is a flow chart showing the program that the battery controller 130 executes to reduce the difference in residual capacity between the battery groups 110, 120.

### DETAILED DESCRIPTION OF THE INVENTION

A representative battery assembly may include a plurality of battery groups and feeder. Battery groups include at least first and second battery groups and each battery group is defined by one or more cells. When each of the battery groups is formed by a plurality of cells, the battery group may be formed by combination of cells of the same kind or of different kinds. Typically, lithium ion cells and nickel hydrogen cells can be used. Further, when each of the battery groups is formed by a plurality of cells, the cells may be connected to each other in series or in parallel. Also, the battery groups may be connected to each other in series or in parallel.

The feeder may feed electricity from the first battery group to the second battery group based on a difference in residual capacity caused by a difference of self-discharge amount between the first battery group and the second battery group. The "residual capacity" of the battery groups may be defined as the quantity of residual electricity (Ampere hour) that can be taken out until the battery groups complete discharging. The manner of "feeding electricity" may typically embrace electricity feeding between the battery groups so as to reduce the difference in residual capacity between the battery groups. Moreover, it may also embrace the feeding in advance by predicting as to which battery group will have smaller residual capacity after a lapse of a predetermined time period.

According to the invention, because difference in residual capacity between the respective battery groups can be balanced, even if the battery assembly is recharged in the state in which the battery groups have some residual capacities, overcharge and insufficient charge can be alleviated. Further, the life of the battery assembly, which is affected by shortage of residual capacity that results from its self-discharge, can be elongated. As a result, as mentioned above, the battery assembly of this invention can be suitably applied to a battery assembly for a power tool which requires maintaining its performance as high as possible and also requires high durability.

Each of the additional features and method steps disclosed above and below may be utilized separately or in conjunction with other features and method steps to provide improved battery assembly and method for using such battery assembly and devices utilized therein. Representative examples of the present invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

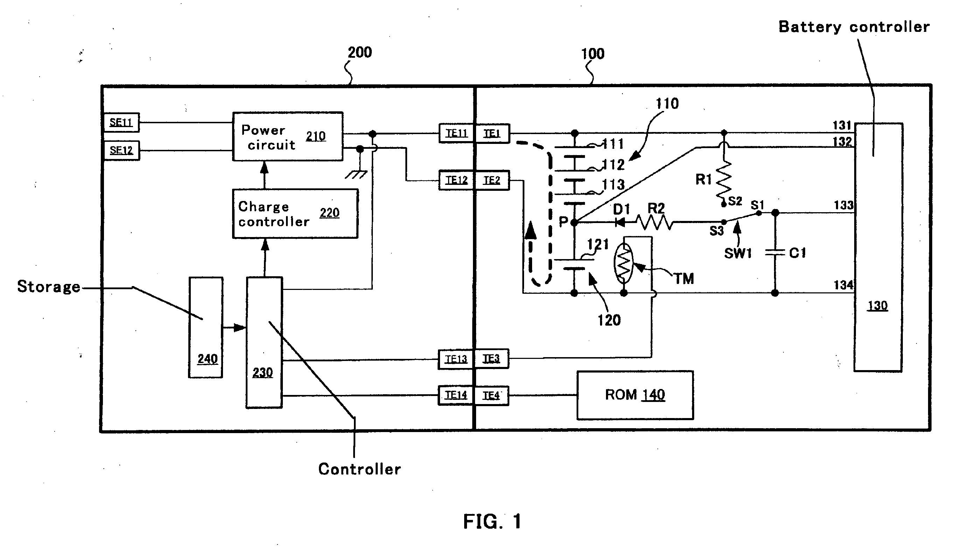

A representative embodiment of the present invention will now be described with reference to the drawings. FIG. 1 shows a block diagram schematically showing a battery pack 100 according to this embodiment. The battery pack 100 includes a battery assembly and a printed circuit board. The battery assembly includes a lithium ion battery group and a nickel hydrogen battery group connected together in series. Further, in FIG. 1, an example of a charger 200 for charging the battery pack 100 is also shown. The printed circuit board includes a circuit in which the battery assembly is charged by using the charger 200 or other similar external equipment, a circuit in which the battery assembly is discharged (or drained), and terminals TE1 to TE4 which can be connected to associated terminals of the charger 200 or a power tool or other similar equipment. The battery pack 100 has a housing in which the battery assembly and the printed circuit board are contained. The battery pack 100 can be removably attached to the charger 200 or a power tool. When the battery pack 100 is attached to the charger 200, the terminals TE1 to TE4 of the battery pack 100 are connected to associated terminals TE11 to TE14 of the charger 200, so that the battery assembly of the battery pack 100 can be charged by using the charger 200. When the battery pack 100 is attached to a power tool or other similar equipment, the terminals TE1 to TE4 of the battery pack 100 are connected to associated terminals of the equipment, so that the equipment can be powered from the battery assembly of the battery pack 100.

The battery assembly within the battery pack 100 has a lithium ion battery group 110 and a nickel hydrogen battery group 120 connected together in series. The circuits on the printed circuit board include a battery controller 130, a ROM 140, a thermistor TM disposed in the vicinity of the nickel hydrogen battery group 120, terminals TE1 to TE4, a switch SW1 that can be changed over by the battery controller 130, a diode D1, resistors R1, R2 of passive elements, and a capacitor C1. The battery controller 130 has a CPU and controls the operation of the battery pack 100. The ROM 140 stores parameters and a charge control program for charging the battery assembly. The terminals TE1 to TE4 are designed to be connected to the charger 200 for charging the battery pack 100, or to appropriate equipment after the battery pack 100 has been charged.

The lithium ion battery group 110 and the nickel hydrogen battery group 120 are features that correspond to the "first battery group" and the "second battery group" in the invention, respectively. Further, the capacitor C1 is a feature that corresponds to the "charger" in the invention, the switch SW1 is the "switch", the battery controller 130 is the "controller".

The battery assembly will now be explained in detail. As mentioned above, the lithium ion battery group 110 is connected to the nickel hydrogen battery group 120 in series. Lithium ion cells 111 to 113 form the lithium ion battery group 110 and are connected together in series within the lithium ion battery group 110. A nickel hydrogen cell 121 forms the nickel hydrogen battery group 120.

The output voltage of one lithium ion cell is about 3.6 V and the output voltage of one nickel hydrogen cell is about 1.2 V. Thus, the battery pack 100 provides the output voltage of 12V (3.6V × 3 + 1.2V = 12V) by connecting the lithium ion battery group 110 having the three lithium ion cells 111 to 113 connected in series, to the nickel hydrogen battery group 120 having the one nickel hydrogen cell 121 in series. The lithium ion cells 111 to 113 are features that correspond to the one or more cells of the first battery group in the invention. The nickel hydrogen cell 121 is a feature that corresponds to the one or more cells of the second battery group in the invention.

The positive side (upper side as viewed in FIG. 1) of the lithium ion battery group 110 of the battery assembly is connected to the terminal TE 1 of the battery pack 100, while the negative side (lower side as viewed in FIG. 1) of the nickel hydrogen battery group 120 is connected to the terminal TE2 of the battery pack 100. When the battery pack 100 is attached to the charger 200, the terminals TE1, TE2 are connected to the terminals TE11, TE12 of the charger 200, respectively, so that the lithium ion battery group 110 and the nickel hydrogen battery group 120 are charged. When the battery pack 100 is attached to a power tool or other similar equipment, the terminals TE1, TE2 are connected to associated terminals of the equipment, so that the lithium ion battery group 110 and the nickel hydrogen battery group 120 can discharge and power the equipment.

One end of the thermistor TM is connected to the negative side of the nickel hydrogen battery group 120, and the other end of the thermistor TM is connected to the terminal TE3. The body of the thermistor TM is disposed near the nickel hydrogen battery group 120, and the impedance of the thermistor TM decreases as the temperature of the nickel hydrogen battery group 120 increases. When the battery pack 100 is attached to the charger 200 and the terminal TE3 is connected to the terminal TE13 of the charger 200, a controller 230 of the charger 200 receives a signal outputted from the thermistor TM via the terminal TE3 of the battery pack 100 and the terminal TE 13 of the charger 200. Thus, the controller 230 can detect the temperature of the nickel hydrogen battery group 120 from the impedance of the thermistor TM.

The ROM 140 is connected to the terminal TE4. When the battery pack 100 is attached to the charger 200, the terminal TE4 is connected to the terminal TE14 of the charger 200. The controller 230 of the charger 200 can read the charge control program and characteristic parameters of the battery pack 100 which are stored in the ROM 140 in advance, via the terminals TE4, TE 14.

Junction P is provided between the negative terminal of the lithium ion cell 113 and the positive terminal of the nickel hydrogen cell 121. The junction P is connected to a terminal 132 of the battery controller 130. Thus, the battery controller 130 can detect the voltages of the lithium ion battery group 110 and the nickel hydrogen battery group 120.

The junction P is connected to the cathode of the diode D1 that blocks a reverse current. The anode of the diode D1 is connected to a contact S3 of the switch SW1 via the resistor R2. The resistor R2 controls a current which is fed from the capacitor C1 to the nickel hydrogen battery group 120. A contact S2 of the switch SW1 is connected to a terminal 131 of the battery controller 130 via the resistor R1. The resistor R1 controls a current which is fed from the lithium ion battery group 110 to the capacitor C1. Further, a terminal S1 of the switch SW1 is connected to a terminal 133 of the battery controller 130 and to one end (the upper terminal as viewed in the drawing) of the capacitor C1. The other end of the capacitor C1 (the lower terminal as viewed in the drawing) is connected to a terminal 134 of the battery controller 130. The terminals TE1 and TE2 are connected to the terminals 131 and 134 of the battery controller 130, respectively. Thus, the terminal TE1, the positive side terminal of the lithium ion battery group 110, one end of the resistor R1, and the terminal 131 of the battery controller 130 are connected together. Further, the terminal TE2, the negative side terminal of the nickel hydrogen battery group 120, one end of the thermistor TM, the lower terminal (as viewed in the drawing) of the capacitor C1, and the terminal 134 of the battery controller 130 are connected together.

When the switch SW1 is connected to the contact S2 side, the capacitor C1 is connected to the positive side of the lithium ion battery group 110 via the resistor R1, so that a circuit for feeding from the lithium ion battery group 110 to the capacitor C1 is formed. On the other hand, when the capacitor C1 is in the charged state and the switch SW1 is connected to the contact S3 side, the capacitor C1 is connected to the positive side of the nickel hydrogen battery group 120 via the diode D1 and the resistor R2, so that a circuit for feeding from the capacitor C1 to the nickel hydrogen battery group 120 is formed. When the capacitor C1 is not in the charged state and the switch SW1 is connected to the contact S3 side, the diode D1 prevents the nickel hydrogen battery group 120 from discharging toward the capacitor C1. In this case, a circuit is formed in which the lithium ion battery group 110 and the nickel hydrogen battery group 120 discharge (when connected under load) or cause self-discharge when being left after recharged.

The battery controller 130 can detect the potential difference between the terminals 131 and 132 and thus the voltage of the lithium ion battery group 110. The battery controller 130 can also detect the potential difference between the terminals 132 and 134 and thus the voltage of the nickel hydrogen battery group 120. The voltage of the lithium ion battery group 110 and the voltage of the nickel hydrogen battery group 120, or the potential difference between the terminals 131and 132 and the potential difference between the terminals 132 and 134 are features that correspond to the "index relating to the residual capacity" in this invention. The circuit for detecting the voltage of the lithium ion battery group 110 and the voltage of the nickel hydrogen battery group 120 (the circuit for detecting the potential difference between the terminals 131 and 132 and the potential difference between the terminals 132 and 134) and its elements are features that correspond to the "detector" in the invention.

The battery controller 130 can detect the potential difference between the terminals 133 and 134 and thus the terminal voltage of the capacitor C1. Further, the battery controller 130 has a storage that stores, in advance, a program for determining the residual capacity from the voltages of the lithium ion battery group 110 and the nickel hydrogen battery group 120 which have been detected by the detecting system, a program for indicating the procedures of feeding in such a way as to reduce the difference in residual capacity, etc. Such feature corresponds to the "storage" in the invention. Preferably, the battery controller 130 is powered from the battery assembly. However, the battery controller 130 may be operated by using a charging device, such as a capacitor, which is specially provided for operating the battery controller 130.

The charger 200 includes a power circuit 210 for converting AC input power into DC power utilized to charge the battery pack 100, a charge controller 220 for controlling the power circuit 210, a controller 230 for controlling the operation of the charger 200, a storage 240 for storing parameters (which vary by the type of the charger 200) utilized for a charging operation by the charger 200, the terminals TE 11 to 14 for connection with the battery pack 100, and input terminals SW11, SW12 for connection with AC input power.

The input side of the power circuit 210 is connected to the input terminals SW11, SW12 which can be connected to an AC input power. The output side of the power circuit 210 is connected to the output terminals TE 11, TE12 of a DC power. The AC input power is converted into the DC power in the power circuit 210 and the DC power is used to charge the battery pack 100. In the charger 200 shown in FIG. 1, the output terminal TE11 is a power supply terminal, and the output terminal TE12 is a grounding terminal. Further, the power circuit 210 outputs driving current (not shown) into which the AC input power has been converted in the power circuit 210. This control power is supplied to an IC in the charger 200. The controller 230 is connected to the storage 240, the power supply terminal TE11, the terminals TE13, TE14 and the charge controller 220.

Operation of charging the battery pack 100 by using the charger 200 is now explained with reference to FIG. 1. AC input power is connected to the input terminals SE11, SE12 of the charger 200. Then, the AC input power is converted into the control power in the power circuit 210 and the control power is supplied to the controller 230, the charge controller 220 and the storage 240 in the charger 200. Thus, the charger 200 starts operating. Then, the battery pack 100 is attached to the charger 200, and the terminals TE11 to TE14 of the charger 200 are connected to the associated terminals TE1 to TE4 of the battery pack 100. At this time, the switch SW1 of the battery pack 100 is in the initial position or connected to the contact S3 side.

When the terminals are thus connected as mentioned above, the controller 230 of the charger 200 reads the charge control program and characteristic parameters of the battery pack 100 stored in the ROM 140 of the battery pack 100, via the terminals TE4, TE14. The controller 230 calculates a suitable charging current value to be outputted at the beginning of the operation of charging the battery pack 100, based on the charge control program, parameters and other similar information which have been read from the ROM 140. Then, the controller 230 outputs a signal that indicates the charging current value to the charge controller 220. The charge controller 220 performs controlling work such that the power circuit 210 outputs the charging current value based on the signal from the controller 230. In this manner, the charging operation is started with respect to the lithium ion battery group 110 and the nickel hydrogen battery group 120.

During the operation, the controller 230 monitors the charging current value via an interconnect line that is connected to the terminal TE11. When the charging current value drops below a predetermined value, the controller 230 detects completion of the operation of charging the battery assembly (the lithium ion battery group 110 and the nickel hydrogen battery group 120) and completes the charging operation.

Further, during the charging operation, the controller 230 receives output signals of the thermistor TM via the terminals TE3, TE13. From the output signals of the thermistor TM and based on the characteristic that the impedance of the thermistor TM decreases as the temperature of the nickel hydrogen battery group 120 increases, the controller 230 checks whether the temperature of the nickel hydrogen battery group 120 disposed in the vicinity of the thermistor TM is below a predetermined temperature. When the controller 230 detects that the temperature of the nickel hydrogen battery group 120 is above the predetermined temperature, the controller 230 outputs a signal for stopping the charging operation to the charge controller 220. Generally, the temperature of a nickel hydrogen cell more easily increases by charging operation compared with a lithium ion cell. Therefore, by monitoring at least the temperature of the nickel hydrogen battery group 120, excessive increase of temperature in each battery group can be prevented. Thus, the lithium ion battery group 110 and the nickel hydrogen battery group 120 of the battery pack 100 are charged by using the charger 200.

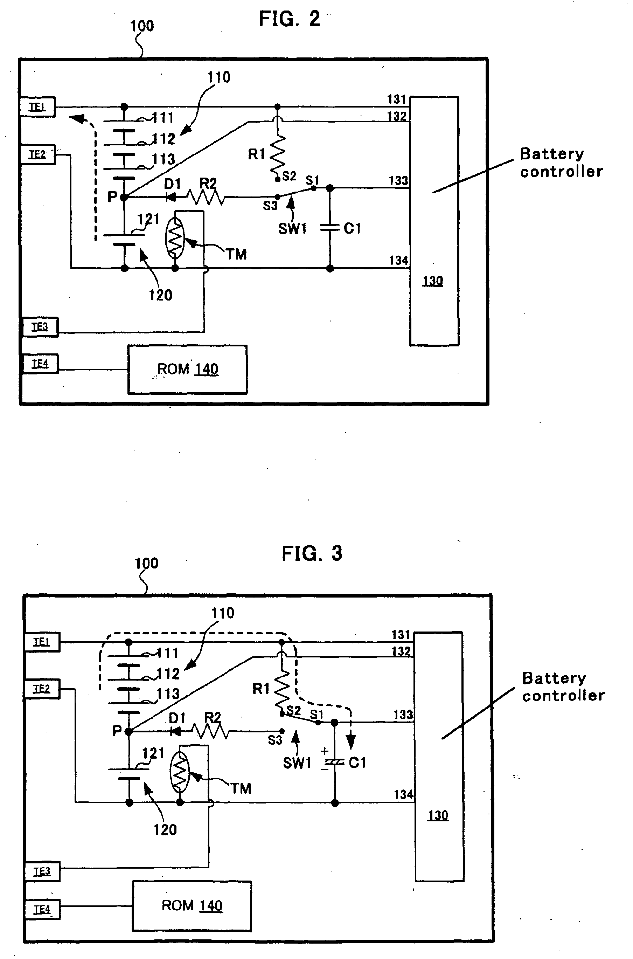

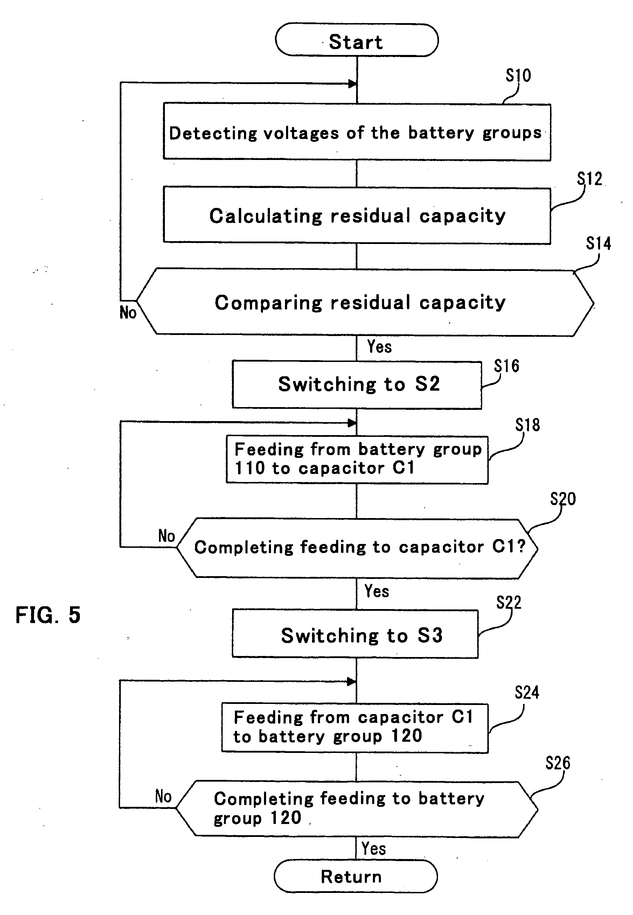

When the battery pack 100 is left standing after charged and detached from the charger 200, the battery groups 110, 120 forming the battery assembly cause self-discharge. As a result, the capacities of the battery groups 110, 120 decrease with a lapse of time. The amount (speed) of self-discharge per unit time may vary between the battery groups 110 and 120 due to differences in the kinds of cells forming the battery groups 110, 120 and in ambient temperatures around the cells. If a difference in residual capacity is caused between the battery groups 110, 120 due to a difference of self-discharge between the cells, it may not be possible to make full use of the performance of the battery groups 110, 120. In this connection, operation of the battery pack 100 for reducing the difference in residual capacity between the battery groups 110, 120 is now explained with reference to FIGS. 2 to 5. FIGS. 2 to 4 are block diagrams showing the operation of the battery pack 100. FIG. 5 is a flow chart showing the program that the CPU of the battery controller 130 executes to reduce the difference in residual capacity between the battery groups.

When the battery pack 100 is detached from the charger 200, as shown in FIG. 2, the switch SW1 is connected to the contact S3 side, and the self-discharge current runs in the direction shown by the dotted arrow in the drawing. Thus, the battery assembly causes self-discharge and then, decrease of the capacity of the battery assembly due to self-discharge takes places. It is generally known that the self-discharge speed of the lithium ion battery cell is lower than that of the nickel hydrogen battery cell when they are placed under the same environment. Therefore, after a lapse of a predetermined time period, the residual capacity of the nickel hydrogen battery group 120 tends to be smaller than that of the lithium ion battery group 110. Therefore, the CPU of the battery controller 130 executes feeding electricity from the lithium ion battery group 110 to the nickel hydrogen battery group 120 based on the residual capacity difference between the battery groups 110, 120.

The procedure of the CPU within the battery controller 130 to feed electricity from the lithium ion battery group 110 to the nickel hydrogen battery group 120 is now explained based on the flow chart shown in FIG. 5 and as well, with reference to FIGS. 2 to 4. In step S10, the battery controller 130 detects the voltages of the lithium ion battery group 110 and the nickel hydrogen battery group 120 at predetermined time intervals. In a typical case, change in residual capacity due to self-discharge will not be found if such detection is conducted at time intervals as close as on a daily or hourly basis. Such detection of the voltage of each battery group should be conducted at predetermined time intervals as long as, for example, on a weekly or monthly basis. After detecting the voltage of each battery group, the battery controller 130 goes to step S12. In step S12, the battery controller 130 calculates the residual capacity of the lithium ion battery group 110 and the nickel hydrogen battery group 120. After calculating the residual capacities of the battery groups 110, 120, the battery controller 130 goes to step S14.

In step S14, the battery controller 130 compares the lithium ion battery group 110 and the nickel hydrogen battery group 120 in residual capacity. If the battery controller 130 detects that the residual capacity of the nickel hydrogen battery group 120 is smaller by more than a predetermined amount than the lithium ion battery group 110 (if YES in step S14), it goes to step S16. Otherwise (if NO in step S14), it returns to step S10.

In step S16, the battery controller 130 changes over the switch SW1 to the contact S2 side (see FIG. 3). As a result, the positive side of the lithium ion battery group 110 is connected to one end (the upper terminal as viewed in FIG. 3) of the capacitor C1 via the resistor R1 and the contact S2 of the switch SW1 (the circuit for feeding from the lithium ion battery group 110 to the capacitor C1 is closed). At the same time, the capacitor C1 is disconnected from the resistor R2 (the circuit for feeding from the capacitor C1 to the nickel hydrogen battery group 120 is opened). Then, the battery controller 130 goes to step S18.

In step S18, when the positive side of the lithium ion battery group 110 is connected to the one end of the capacitor C1 via the resistor R1 and the contact S2 of the switch SW1, a current (shown by the dotted arrow in FIG. 3) runs from the lithium ion battery group 110 to the capacitor C1 through the resistor R1, so that feeding from the lithium ion battery group 110 to the capacitor C1 is performed. Then, the battery controller 130 goes to step S20.

In step S20, the battery controller 130 determines whether the terminal voltage of the capacitor C1 has exceeded a predetermined value. If it is determined that the terminal voltage of the capacitor C1 is over a predetermined value as to complete the feeding to the capacitor C1 (if YES in step S20), the battery controller 130 goes to step S22. Otherwise (if NO in step S20), it returns to step S18 and continues the feeding.

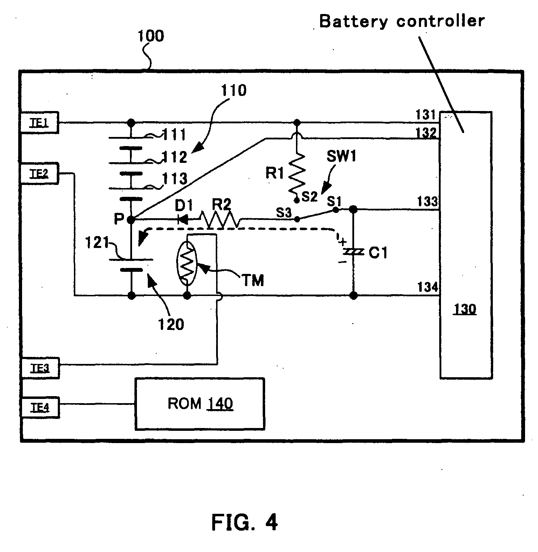

In step S22, the battery controller 130 changes over the switch SW1 to the contact S3 side (see FIG. 4). As a result, the positive side of the nickel hydrogen battery group 120 is connected to one end (the upper terminal as viewed in FIG. 4) of the capacitor C1 via the diode D1, the resistor R2 and the contact S3 of the switch SW1 (the circuit for feeding from the capacitor C1 to the nickel hydrogen battery group 120 is closed). At the same time, the capacitor C1 is disconnected from the resistor R1 (the circuit for feeding from the lithium ion battery group 110 to the capacitor C1 is opened). Then, the battery controller 130 goes to step S24.

In step S24, when the one end of the capacitor C1 is connected to the nickel hydrogen battery group 120 via the contact S3 of the switch SW1, the resistor R2 and the diode D1, a current (shown by the dotted arrow in FIG. 4) runs from the capacitor C1 to the nickel hydrogen battery group 120 through the resistor R2, so that feeding from the capacitor C1 to the nickel hydrogen battery group 120 is completed. Then, the battery controller 130 goes to step S26.

In step S26, the battery controller 130 determines whether the voltage of the nickel hydrogen battery group 120 has been balanced with the terminal voltage of the capacitor C1 and the feeding from the capacitor C1 to the nickel hydrogen battery group 120 has been completed. For example, a time period long enough for completing the feeding is predetermined, and the battery controller 130 determines whether the predetermined time period has lapsed. If the battery controller 130 determines that the feeding from the capacitor C1 to the nickel hydrogen battery group 120 has been completed (if YES in step S26), the CPU completes the program. Otherwise (if NO in step S26), it returns to step S24 and continues the feeding.

As mentioned above, when the battery controller 130 determines that the residual capacity of the nickel hydrogen battery group 120 is smaller by more than a predetermined amount than the lithium ion battery group 110, the battery controller 130 changes over the switch SW1 and executes feeding from the lithium ion battery group 110 to the capacitor C1. After completion of this feeding, the battery controller 130 changes over the switch SW1 again and executes feeding from the capacitor C1 to the nickel hydrogen battery group 120. In this manner, the difference in residual capacity between the lithium ion battery group 110 and the nickel hydrogen battery group 120 can be reduced. As a result, even when the battery pack 100 is recharged by using the charger 200 in the state in which the battery groups 110, 120 have some residual capacities, overcharge and insufficient charge do not easily occur. Thus, the life of the battery pack 100 can be elongated. Naturally, according to the battery pack 100 of this invention, even if it has been left attached to the charger 200 after charged, the feeding operation is performed in the same manner as in this embodiment, and the difference in residual capacity between the battery groups 110 and 120 can be also reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Description of Numerals

100 battery pack
110 lithium ion battery group
120 nickel hydrogen battery group
130 battery controller
200 charger
C1 capacitor
SW1 switch
TM thermistor

## Claims

1. A battery assembly comprising:
a plurality of battery groups including at least first and second battery groups, wherein each battery group is defined by one or more cells,
**characterized by** means for feeding electricity from the first battery group to the second battery group based on a difference in residual capacity caused by a difference of self-discharge between the first battery group and the second battery group.

2. The battery assembly as defined in claim 1, wherein the cell(s) of the first battery group is (are) different in kind from the cell(s) of the second battery group.

3. The battery assembly as defined in claim 1 or 2, wherein the feeder feeds electricity from the first battery group to the second battery group based on a difference in residual capacity caused by a difference of self-discharge between at least one of the cells of the first kind in the first battery group and at least one of the cells of the second kind in the second battery group.

4. The battery assembly as defined in any one of claims 1 to 3, wherein the feeder comprises a charger provided between the first and second battery groups and wherein the charger is connected to the positive side of the first battery group to feed electricity from the first battery group to the charger, while the charger is connected to the positive side of the second battery group to feed electricity from the charger to the second battery group.

5. The battery assembly as defined in claim 4 further comprising a switch, a first circuit in which the charger is connected to the positive side of the first battery group and a second circuit in which the charger is connected to the positive side of the second battery group, wherein the switch selectively changes the first and the second circuit.

6. A battery pack comprising:
battery assembly as defined in any one of claims 1 to 5,
an index relating to the residual capacity of at least one of the cells of the first and the second battery groups,
a detector that detects the index,
a program to determine the difference in residual capacity based on the index relating to the residual capacity,
a storage that stores the program and
a controller that reads the program from the storage, determines the difference in residual capacity by using the detected index relating to the residual capacity, and executes electricity feeding from the first battery group to the second battery group based on the determined difference in residual capacity by using the feeding system.

7. The battery pack as defined in claim 6, wherein the index relating to the residual capacity is defined by voltage of at least one of the cells of the first and the second battery groups.

8. The battery assembly as defined in any one of claims 1 to 7, wherein the first battery group comprises lithium ion battery cell and the second battery group comprises nickel hydrogen battery cell.

9. The battery assembly as defined in any one of claims 1 to 9, wherein the feeder comprises a capacitor.
